# EUROPÄISCHE PATENTSCHRIFT

(11) **EP 1 099 465 B1**
(45) Veröffentlichungstag und Bekanntmachung des Hinweises auf die Patenterteilung: **14.06.2006**
(21) Anmeldenummer: 00120242.3
(22) Anmeldetag: 27.09.2000
(51) Int. Cl.: B01D 53/94, F01N 3/021, F02D 41/14, F01N 9/00

(54) **Verfahren und Vorrichtung zum Reinigen des Abgases einer Brennkraftmaschine**
Process and apparatus for purifying the exhaust gas of an internal combustion engine
Procédé et dispositif pour purifier le gaz d'échappement d'un moteur à combustion interne

(30) Priorität: 07.10.1999 DE 19948156
(43) Veröffentlichungstag der Anmeldung: 16.05.2001
(73) Patentinhaber: Volkswagen Aktiengesellschaft, 38436 Wolfsburg (DE)
(72) Erfinder: Düsterdiek, Thorsten Dr., 30163 Hannover (DE); Kahmann, Gerhard, 38302 Wolfenbüttel (DE); Engeler, Werner, 38527 Meine (DE)

(56) Entgegenhaltungen:
- EP-A- 0 341 832
- EP-A- 0 859 132
- WO-A-99/30021
- PATENT ABSTRACTS OF JAPAN vol. 1996, no. 04, 30. April 1996 (1996-04-30) & JP 07 332066 A (MATSUSHITA ELECTRIC IND CO LTD), 19. Dezember 1995 (1995-12-19)

## Beschreibung

Die Erfindung bezieht sich auf ein Verfahren und eine Vorrichtung zum Reinigen des Abgases einer Brennkraftmaschine nach dem Oberbegriff des Anspruchs 1 oder 4.

Im Funktionsbetrieb einer Brennkraftmaschine, insbesondere einer Diesel-Brennkraftmaschine, entstehen bei der Verbrennung hauptsächlich aus Ruß bestehende Partikel, deren Austritt aus der zugehörigen Abgasanlage möglichst vermieden werden soll. Zur Verminderung der Partikel-Emmision ist es bekannt, einen Partikelfilter in der Abgasleitung anzuordnen, der ein Großteil der Partikel ausfiltert. Ein Partikelfilter neigt jedoch dazu, sich mit der Zeit zuzusetzen, wenn die Partikel nicht kontinuierlich oder in Zeitintervallen frei- bzw. abgebrannt werden. Letzteres erfolgt bei einer Abgastemperatur, die oberhalb der Zündtemperatur von Ruß liegt, nämlich etwa 550°C. Da eine solche Betriebstemperatur unter üblichen Betriebsbedingungen im Straßenverkehr nicht immer erreicht wird, bedarf es Maßnahmen zur Erhöhung der Abgastemperatur in der Abgasleitung zwecks Einleitung und Durchführung einer Regeneration des Partikelfilters durch Frei- bzw. Abbrennen.

Eine bekannte Maßnahme ist das sogenannte CRT-System (Continius Regenerating Trap), das aus einem Rußpartikelfilter und einem davor positionierten Oxidationskatalysator besteht. In dem Katalysator wird NO zu NO₂ oxidiert, das nachfolgend als Oxidationsmittel zur Verbrennung des am Partikelfilter gesammelten und hauptsächlich aus Kohlenstoff bestehenden Rußes verwendet wird.

Durch die Verwendung dieses Systems läßt sich zwar die Abgastemperatur, bei der die Partikel frei- bzw. abbrennen, zwar vermindern, jedoch kann ein funktionssicherer Betrieb dieses Systems insbesondere bei einer Diesel-Brennkraftmaschine nicht gewährleistet werden, da die üblichen Fahrbedingungen und daraus resultierende Abgasfunktionsbedingungen eine vorbeschriebene Regeneration des Partikelfilters nicht gewährleisten. Wenn deshalb eine Brennkraftmaschine, insbesondere eine Diesel-Brennkraftmaschine über einen bestimmten Zeitraum mit ungünstigen Funktionsbedingungen betrieben wird, findet eine Partikelakkumulation am Filter statt, ohne daß dieser regeneriert wird. Es ist außerdem zu berücksichtigen, daß selbst dann, wenn das Abgas eine Temperatur aufweist, bei der eine Oxidation der Partikel stattfinden sollte, diese nur dann stattfindet, wenn weitere Funktionsbedingungen erfüllt sind, die die Oxidation bzw. Regeneration gewährleisten.

Die Druckschrift EP-A-0 859 132 beschreibt ein Verfahren und eine Vorrichtung zum Reinigen des Abgases einer Dieselbrennkraftmaschine mit einem Oxidationskatalysator für die Oxidation von NO zu NO₂ und einem Partikelfilter. Die Vorrichtung ist zur Überwachung des Verfahrens mit Druck- und Temperatursensoren ausgerüstet.

JP-A-7 332 066 bezieht sich auf eine Vorrichtung zur Reinigung des Abgases einer Dieselbrennkraftmaschine mit Partikelfiltern, die mit Druck- Temperatur- und CO₂₋Sensoren ausgerüstet ist.

Die Vorrichtung der WO-A-99 30021 umfasst einen Oxidationskatalysator, einen NOx-Speicherkatalysator und eine DeNOx-Katalysator, wobei das Verfahren mittels NOx-Sensoren, einem HC-Sensor und eines Temperatursensors gesteuert wird.

EP-A-0 341 832 beschreibt ein CRT-System mit einem Rußpartikelfilter und einem davor angeordneten Oxidationskatalysator zur kontinuierlichen Regeneration des Abgases einer Dieselbrennkraftmaschine.

Der Erfindung liegt die Aufgabe zugrunde, ein Verfahren und eine Vorrichtung der eingangs angegebenen Arten so weiterzubilden, daß eine verbesserte Oxidation der Partikel stattfinden kann, vorzugsweise bei niedriger Betriebstemperatur stattfinden kann.

Diese Aufgabe wird durch die Merkmale der Ansprüche 1 bzw. 4 gelöst. bevorzugte Ausführungsformen sind Gegenstand der Unteransprüche.

Bei dem erfindungsgemäßen Verfahren werden der NO₂-Anteil und der C-Anteil im Abgas ermittelt und bei Unterschreitung oder Überschreitung eines bestimmten Anteilverhältnisses im Abgas der NO₂-Anteil und/oder C-Anteil im Abgas so erhöht und/oder vermindert, daß die Anteile in bestimmten Wertebereichen liegen. Hierdurch wird für ein günstiges NO₂/Kohlenstoff-Verhältnis und somit für eine günstige Bedingung für die Oxidation der Partikel gesorgt, so daß diese besser und mit verbesserter Verbrennungsleistung sowie umweltfreundlich in der Abgasleitung stattfinden kann. Diese Begünstigung der Funktionsbedingungen findet kontinuierlich statt, was zu einer kontinuierlichen Wirksamkeit der Verbesserung der Verbrennung der Partikel führt.

Ferner kann die erfindungsgemäße Verbesserung der Funktionsbedingungen während eines Regenerationsvorgangs stattfinden der dann eingeleitet wird, wenn aufgrund einer Zusetzung des Filters durch Partikel der Abgasgegendruck einen bestimmten Wert überschreitet. Hierdurch werden die bereits beschriebenen Vorteile beim Regenerieren des Partikelfilters erreicht.

Die vorbeschriebenen Vorteile gelten auch für die erfindungsgemäße Vorrichtung nach Anspruch 4, wobei diese sich darüber hinaus durch eine einfache und kostengünstig herstellbare sowie kleine Bauweise und sichere Funktion auszeichnet bzw. auszeichnen.

Nachfolgend werden die Erfindung und weitere durch sie erzielbare Vorteile anhand eines vorteilhaften Ausführungsbeispiels und einer Zeichnung näher erläutert.

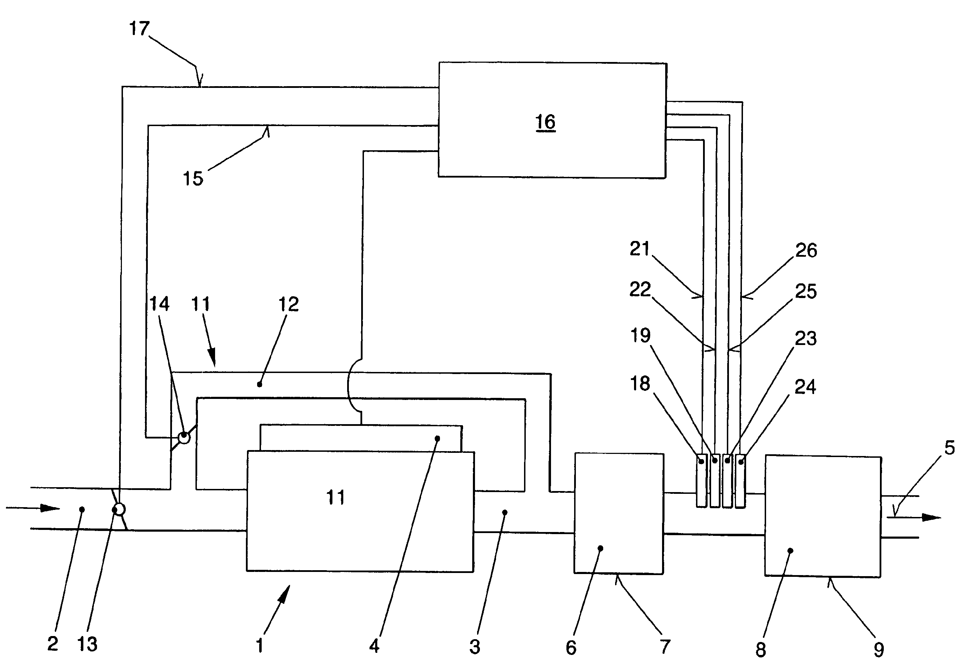

Die Zeichnung zeigt eine erfindungsgemäße Vorrichtung zum Reinigen des Abgases einer Brennkraftmaschine, insbesondere einer Diesel-Brennkraftmaschine, in schematischer Darstellung. In der Zeichnung ist eine Brennkraftmaschine, insbesondere eine Diesel-Brennkraftmaschine, mit 1 bezeichnet, und sie weist mehrere Zylinder auf, zu denen sich eine Luftansaugleitung 2 und von denen sich eine Abgasleitung 3 in an sich bekannter Weise erstrecken. Der Brennkraftmaschine 1 sind im einzelnen nicht dargestellte Kraftstoff-Einspritzventile einer Kraftstoff-Einspritzvorrichtung 4 zugeordnet. Die Zylinder werden durch direkte Einspritzung mit Kraftstoff aus den Einspritzventilen und mit Verbrennungsluft durch die Luftansaugleitung 2 in einem bestimmten Kraftstoff/Luft-Verhältnis versorgt, wodurch der Verbrennungsbetrieb gewährleistet ist. Die Zylinder der Brennkraftmaschine 1 sind durch nicht dargestellte Zweigleitungsabschnitte mit der gemeinsamen Abgasleitung 3 verbunden, die von dem von der Brennkraftmaschine 1 ausgestoßenen Abgas in der mit dem Pfeil 5 bezeichneten Strömungsrichtung durchströmt wird. In der Abgasleitung 3 ist ein schädliche Gasbestandteile adsorbierender Katalysator 6, insbesondere ein OxidationsKatalysator 6, in einem Gehäuse 7 angeordnet, das in seiner Querschnittsgröße größer bemessen ist, als die Querschnittgröße der Abgasleitung 3. In der Strömungsrichtung 5 hinter dem Katalysator 6 ist in der Abgasleitung 3 ein Partikelfilter 8 in einem Gehäuse 9 angeordnet. Der Brennkraftmaschine 1 ist eine Abgasrückführvorrichtung 11 zugeordnet, die eine die Brennkraftmaschine umgehende Rückführleitung 12 aufweist, die von der Abgasleitung 3 abzweigt und in der Strömungsrichtung 5 vor der Brennkraftmaschine 1 mit der Luftansaugleitung 2 verbunden ist und zwar in der Strömungsrichtung 5 hinter einer Drosselklappe 13 in der Luftansaugleitung 2, so daß die Verbrennungsluft im Funktionsbetrieb zunächst zur Drosselklappe 13 und dann zur Mündung der Rückführleitung 12 und zu den nicht dargestellten Zylindern gelangt. In der Rückführungsleitung 12 ist ein verstellbares Abgas-Rückführventil 14 angeordnet, mit dem die Menge des rückführbaren Abgases einstellbar ist. Das Rückführventil 14 ist durch eine Steuerleitung 15 mit einer elektrischen oder elektronischen Steuereinrichtung 16 mit einem Prozessor (CPO) verbunden. Die Drosselklappe 13 ist durch eine Signalleitung 17 mit der Steuereinrichtung 16 verbunden.

In der Abgasleitung 3 sind in der Strömungsrichtung 5 vor dem Katalysator 6 ein Temperatursensor 18 und ein Drucksensor 19 angeordnet, die durch Signalleitungen 21, 22 mit der elektronischen Steuereinrichtung 16 verbunden sind. Ferner sind in der Abgasleitung 3 zwischen dem Katalysator 6 und dem Partikelfilter 8 ein NOx-Sensor 23 und ein Kohlenstoffsensor 24 angeordnet, die durch Signalleitungen 25, 26 ebenfalls mit der elektronischen Steuereinrichtung 16 verbunden sind. Der Gehalt an NO₂ kann aus dem gemessenen NOx, der Luftmasse und der Abgastemperatur berechnet werden.

Im Funktionsbetrieb der Brennkraftmaschine 1 gelangt das Abgas durch die Abgasleitung 3 zum Partikelfilter 8, an dem die Rußpartikel gesammelt werden, wobei das Abgas die Abgasleitung 3 weiter durchströmt und aus dieser ausströmt.

Mit den Sensoren 18, 19, 23 und 24 wird die Abgastemperatur, der Druck in der Abgasleitung 3 vor dem Partikelfilter 8, der NO₂-Anteil und der C-Anteil im Abgas fortwährend überwacht und mit in der Steuereinrichtung 16 gespeicherten Daten bzw. Datenbereichen verglichen und wie folgt gesteuert.

Wenn die Abgastemperatur oberhalb eines bestimmten Wertes bzw. in einem bestimmten Wertebereich liegt, ist eine kontinuierliche Regeneration des Partikelfilters 8 durch eine kontinuierliche Oxidation der Partikel aufgrund des vorhandenen NO₂ gewährleistet, das der NO zu NO₂ umsetzende Katalysator 6 abgibt.

Wenn der Partikelfilter 8 sich z.B. bei Betriebsphasen bei geringerer Betriebstemperatur mit Partikeln zusetzt und der Abgasdruck im Bereich des Drucksensors 19 einen bestimmten Wert übersteigt, leitet die Steuereinrichtung 16 selbsttätig Maßnahmen ein, die zu einer Temperaturerhöhung des Abgases führen. Beim vorliegenden Ausführungsbeispiel wird bzw. werden die Drosselung der Verbrennungsluft vergrößert, was durch eine Anstellung der Drosselklappe 13 erfolgt, und/oder eine Abgasrückführmenge eingestellt oder die Abgasrückführmenge vergrößert, was durch ein Vergrößern der Drossel 14 erfolgen kann und/oder es wird der Einspritzbeginn an der durch eine Steuerleitung 27 mit der Steuereinrichtung 16 verbundenen Einspritzvorrichtung 4 auf früher eingestellt. Hierdurch lassen sich sowohl höhere Abgastemperaturen als auch günstige NO₂/Kohlenstoff-Verhältnisse einstellen.

Beim vorliegenden Ausführungsbeispiel kann die erzwungene Regeneration des Partikelfilters 8 Kennfeld- oder Schwellwert-gesteuert durch den Drucksensor 19 erfolgen. Im Rahmen der Erfindung ist es jedoch auch möglich, ohne Drucksensor 19 zu arbeiten und ein günstiges NO₂/Kohlenstoff-Verhältnis die angestrebte Temperaturerhöhung durch vorbeschriebenen Einstellmaßnahmen kontinuierlich zu erzeugen.

### BEZUGSZEICHENLISTE

- 1: Brennkraftmaschine
- 2: Luftansaugleitung
- 3: Abgasleitung
- 4: Kraftstoff-Einspritzvorrichtung
- 5: Strömungsrichtung (Pfeil)
- 6: Katalysator
- 7: Gehäuse
- 8: Partikelfilter
- 9: Gehäuse
- 11: Abgasrückführvorrichtung
- 12: Rückführungsleitung
- 13: Drosselklappe
- 14: Abgas-Rückführventil
- 15: Steuerleitung
- 16: elektronische Steuereinrichtung
- 17: Signalleitung
- 18: Temperatursensor
- 19: Drucksensor
- 21: Signalleitung
- 22: Signalleitung
- 23: NO₂-Sensor
- 24: Kohlenstoff-Sensor
- 25: Signalleitung
- 26: Signalleitung

## Patentansprüche

1. Verfahren zum Reinigen des Abgases einer Brennkraftmaschine (1), insbesondere einer Diesel-Brennkraftmaschine, mit einem Partikelfilter (8) in einer Abgasleitung (3) der Brennkraftmaschine (1), bei dem die im Abgas enthaltenen Partikel mit dem Partikelfilter (8) gefiltert werden, wobei in der Strömungsrichtung (5) vor dem Partikelfilter eine Oxidationskatalysator (6) angeordnet ist, der NO im Abgas zu NO₂ oxidiert,
**dadurch gekennzeichnet, daß**
der NO₂-Anteil und der C-Anteil im Abgas ermittelt werden und bei Unterschreitung und/oder Überschreitung bestimmter Wertebereiche im Abgas der NO₂-Anteil und/oder der C-Anteil im Abgas so erhöht oder vermindert wird bzw. werden, daß die Anteile in einem bestimmten NO₂/C-Verhältnis-Bereich liegen, indem die Ansaugluftmenge gedrosselt wird und/oder eine Abgasmenge rückgeführt wird oder eine rückgeführte Abgasmenge vergrößert wird und/oder der Einspritzbeginn auf früher eingestellt wird.

2. Verfahren nach Anspruch 1, **dadurch gekennzeichnet, daß** der Abgasdruck in der Strömungsrichtung vor dem Partikelfilter (8) ermittelt wird und das Kraftstoff/Luft-Verhältnis dann verringert bzw. fetter eingestellt wird, wenn der Abgasdruck einen bestimmten Wert übersteigt.

3. Verfahren nach Anspruch 2, **dadurch gekennzeichnet, daß** die Erhöhung und/oder Verminderung des NO₂-Anteils und/oder des C-Anteils im Abgas beendet wird, wenn der Abgasdruck einen bestimmten Wert unterschreitet.

4. Vorrichtung, insbesondere zur Durchführung des Verfahrens nach einem der vorherigen Ansprüche, mit
einer Brennkraftmaschine (1), insbesondere einer Diesel-Brennkraftmaschine,
einer sich zur Brennkraftmaschine (1) erstreckende Luftansaugleitung (2), in der eine verstellbare Drossel (13) angeordnet ist,
einer Einspritzvorrichtung (4), insbesondere für eine Direkteinspritzung in die Zylinder der Brennkraftmaschine (1),
einer sich von der Brennkraftmaschine (1), erstreckenden Abgasleitung (3), in der ein Partikelfilter (8) angeordnet ist,
einem in Strömungsrichtung des Abgases vor dem Partikelfilter (8) angeordneten Oxidationskatalysator, und
einer elektrischen Steuereinrichtung (16) zum Steuern der Einspritzvorrichtung (4), **dadurch gekennzeichnet, daß** in der Abgasleitung (3) in Strömungsrichtung vor dem Partikelfilter (8) ein NO₂-Sensor (23) zum Ermitteln des NO₂-Anteils im Abgas und ein C-Sensor (24) zum Ermitteln des C-Anteils im Abgas angeordnet sind, die jeweils dem zugehörigen Anteil entsprechende Signale der Steuereinrichtung (16) übermitteln, und die Steuereinrichtung (16) die Vorrichtung (1) so einstellt, daß der NO₂-Anteil und der C-Anteil in einem bestimmten Wertebereich liegen, indem die Steuereinrichtung (16) die Ansaugluftmenge drosselt und/oder eine Abgasmenge rückführt oder eine rückgeführte Abgasmenge vergrößert und/oder den Einspritzbeginn auf früher einstellt.

5. Vorrichtung nach Anspruch 4, **dadurch gekennzeichnet, daß** ein Drucksensor (19) in der Abgasleitung (3) in der Strömungsrichtung (5) vor dem Partikelfilter (8) angeordnet ist, der durch eine Signalleitung (22) mit der Steuereinrichtung (16) verbunden ist.

6. Vorrichtung nach Anspruch 5, **dadurch gekennzeichnet, daß** die Steuereinrichtung (16) dann, wenn der Abgasdruck einen bestimmten Wert übersteigt, das Kraftstoff/Luft-Verhältnis verringert bzw. fetter einstellt.

## Claims

1. Method for purifying the exhaust gas from an internal combustion engine (1), in particular a diesel internal combustion engine, having a particulate filter (8) in an exhaust pipe (3) of the internal combustion engine (1), in which method the particulate contained in the exhaust gas are filtered using the particulate filter (8), an oxidation catalytic converter (6), which oxidizes NO in the exhaust gas to form NO₂, being arranged upstream of the particulate filter, as seen in the direction of flow (5), **characterized in that** the level of NO₂ and the level of C in the exhaust gas are determined and, if these levels are above and/or below defined ranges of values in the exhaust gas, the NO₂ level and/or the C level in the exhaust gas is/are increased or reduced in such a way that the levels are within a defined NO₂/C ratio range by the intake air quantity being throttled and/or an exhaust-gas quantity being recirculated or a recirculated exhaust-gas quantity being increased and/or the start of injection being set to an earlier time.

2. Method according to Claim 1, **characterized in that** the exhaust-gas pressure is determined upstream of the particulate filter (8) as seen in the direction of flow, and the air/fuel ratio is then reduced or made richer if the exhaust-gas pressure exceeds a certain level.

3. Method according to Claim 2, **characterized in that** the increase and/or reduction in the NO₂ level and/or the C level in the exhaust gas is terminated when the exhaust-gas pressure exceeds a defined value.

4. Apparatus, in particular for carrying out the method according to one of the preceding claims, having an internal combustion engine (1), in particular a diesel internal combustion engine,
an air intake line (2), which extends to the internal combustion engine (1) and in which there is arranged an adjustable throttle (13),
an injection apparatus (4), in particular for direct injection into the cylinders of the internal combustion engine (1),
an exhaust pipe (3), which extends from the internal combustion engine (1) and in which there is arranged a. particulate filter (8),
an oxidation catalytic converter arranged upstream of the particulate filter (8), as seen in the direction of flow of the exhaust gas, and
an electric control device (16) for controlling the injection apparatus (4),
**characterized in that** an NO₂ sensor (23) for determining the NO₂ level in the exhaust gas and a C sensor (24) for determining the C level in the exhaust gas are arranged in the exhaust pipe (3), upstream of the particulate filter (8) as seen in the direction of flow, which sensors each transmit signals corresponding to the associated level to the control device (16), and the control device (16) sets the apparatus (1) in such a way that the NO₂ level and the C level are within a defined range of values by the control device (16) throttling the intake air quantity and/or recirculating an exhaust-gas quantity or increasing a recirculated exhaust-gas quantity and/or setting the start of injection to an earlier time.

5. Apparatus according to Claim 4, **characterized in that** a pressure sensor (19) is arranged in the exhaust pipe (3), upstream of the particulate filter (8), as seen in the direction of flow (5), which pressure sensor is connected to the control device (16) by a signal line (22).

6. Apparatus according to Claim 5, **characterized in that** the control device (16) reduces or enriches the air/fuel ratio when the exhaust-gas pressure exceeds a defined value.

## Revendications

1. Procédé d'épuration des gaz d'échappement d'un moteur à combustion interne (1), en particulier un moteur à combustion interne diesel, qui présente un filtre (8) à particules dans un conduit (3) de gaz d'échappement du moteur à combustion interne (1) et dans lequel les particules contenues dans les gaz d'échappement sont filtrées par le filtre (8) à particules, un catalyseur d'oxydation (6) qui oxyde en NO₂ le NO présent dans les gaz d'échappement étant disposé en amont du filtre à particules dans la direction d'écoulement (5),
**caractérisé en ce que**
la teneur en NO₂ et la teneur en C dans les gaz d'échappement sont déterminées, et lorsque des plages de valeurs définies ne sont pas atteintes et/ou sont dépassées dans le gaz d'échappement, la teneur en NO₂ et/ou la teneur en C dans les gaz d'échappement sont augmentées ou diminuées de telle sorte que les teneurs soient situées dans une plage définie du rapport NO₂/C en étranglant le débit d'air aspiré et/ou en recyclant un certain débit de gaz d'échappement ou en augmentant le débit des gaz d'échappement recyclés et/ou en réglant plus tôt le début de l'injection.

2. Procédé selon la revendication 1, **caractérisé en ce que** la pression des gaz d'échappement est déterminée en amont du filtre (8) à particules dans la direction d'écoulement et **en ce que** le rapport carburant/air est alors diminué ou rendu plus riche si la pression des gaz d'échappement dépasse une valeur définie.

3. Procédé selon la revendication 2, **caractérisé en ce que** l'augmentation et/ou la diminution de la teneur en NO₂ et/ou de la teneur en C dans les gaz d'échappement sont interrompues lorsque la pression des gaz d'échappement n'atteint plus une valeur définie.

4. Dispositif en particulier destiné à mettre en oeuvre le procédé selon l'une des revendications précédentes, qui présente :
un moteur à combustion interne (1), en particulier un moteur à combustion interne diesel, un conduit (2) d'aspiration d'air qui s'étend vers le moteur à combustion interne (1) et dans lequel un étranglement ajustable (13) est disposé,
un dispositif d'injection (4), en particulier prévu pour l'injection directe dans les cylindres du moteur à combustion interne (1),
un conduit d'échappement (3) qui part du moteur à combustion interne (1) et dans lequel un filtre (8) à particules est disposé,
un catalyseur d'oxydation disposé en amont du filtre (8) à particules dans la direction d'écoulement des gaz d'échappement et
un dispositif électrique de commande (16) qui commande le dispositif d'injection (4),
**caractérisé en ce que**
en amont du filtre (8) à particules dans la direction d'écoulement, un détecteur (23) de NO₂ qui détermine la teneur en NO₂ dans les gaz d'échappement et un détecteur (24) de C qui détermine la teneur en C dans les gaz d'échappement sont disposés dans le conduit (3) de gaz d'échappement et transmettent chacun au dispositif de commande (16) des signaux qui correspondent à la teneur associée, le dispositif de commande (16) réglant le dispositif (1) de telle sorte que la teneur en NO₂ et la teneur en C soient situées dans une plage définie de valeurs, par le fait que le dispositif de commande (16) étrangle le débit d'air aspiré et/ou recycle un certain débit de gaz d'échappement, augmente le débit des gaz d'échappement recyclés et/ou règle plus tôt le début de l'injection.

5. Dispositif selon la revendication 4, **caractérisé en ce qu'**un détecteur de pression (19) est disposé en amont du filtre (8) à particules dans la direction d'écoulement (5) dans le conduit (3) de gaz d'échappement et est relié par un conducteur de signaux (22) au dispositif de commande (16).

6. Dispositif selon la revendication 5, **caractérisé en ce que** lorsque la pression des gaz d'échappement dépasse une valeur définie, le dispositif de commande (16) diminue ou règle à une valeur plus riche le rapport carburant/air.
